# EUROPÄISCHE PATENTSCHRIFT

(11) **EP 0 563 949 B1**
(45) Veröffentlichungstag und Bekanntmachung des Hinweises auf die Patenterteilung: **20.08.1997**
(21) Anmeldenummer: 93105388.8
(22) Anmeldetag: 01.04.1993
(51) Int. Cl.: B22F 3/02, B22F 5/08

(54) **Verfahren insbesondere zur pulvermetallurgischen Herstellung eines Zahnrades mit einem Kupplungskörper**
Process particularly for the powder metallurgical manufacture of a gear wheel with a coupling device
Procédé en particulier pour la fabrication par metallurgie des poudres d'une roue dentée avec un dispositif d'embrayage

(30) Priorität: 03.04.1992 DE 4211186
(43) Veröffentlichungstag der Anmeldung: 06.10.1993
(73) Patentinhaber: SINTERMETALLWERK KREBSÖGE GMBH, 42477 Radevormwald (DE)
(72) Erfinder: Overhoff, Günter, W-5630 Remscheid (DE); Weber, Manfred, Dr., W-5810 Witten (DE)
(74) Vertreter: Maxton, Alfred, Dipl.-Ing.

(56) Entgegenhaltungen:
- EP-A- 0 370 562

## Beschreibung

Die Erfindung betrifft ein Verfahren zur Herstellung eines zweiteiligen Bauteiles, nämlich eines Zahnrades mit einem Kupplungskörper auf einem Sitz des Zahnrades, insbesondere für Synchrongetriebe, bei dem das Zahnrad und der Kupplungskörper einzeln hergestellt und anschließend fest miteinander verbunden werden. Die Erfindung betrifft ferner ein Zahnrad, das mit einem Kupplungskörper verbunden ist.

Wenn ein derartiges Bauteil für ein Synchrongetriebe bestimmt ist, stellt das Zahnrad ein Gangrad dar, und der Kupplungskörper weist einen Synchronkonus auf, der mit dem Synchronkonus eines Synchronringes zusammenwirkt. Synchronring und der Kupplungskörper des Bauteiles dienen also zur Synchronisation des Zahnrades, so daß der Kupplungskörper und das Zahnrad fest miteinander verbunden sein müssen.

Es ist bekannt, Kupplungskörper und Zahnrad beispielsweise durch Längspreßsitz miteinander zu verbinden. Dazu muß die erforderliche Passung in den notwendigen Toleranzen hergestellt werden. Dies erfordert einen erheblichen Aufwand an mechanischer Bearbeitung, beispielsweise Schleifen. Es sind auch andere Verfahren bekannt, Kupplungskörper und Zahnrad fest miteinander zu verbinden, wie durch Laserschweißen oder Bördeln. Alle diese bekannten Verfahren erfordern nicht nur einen besonderen Aufwand an Bearbeitung, sondern verursachen gleichzeitig auch eine erhebliche Bearbeitungszeit. Dies hat Herstellungskosten zur Folge, die bei Massenprodukten schwer wiegen, insbesondere im Bereich von Synchrongetrieben für Kraftfahrzeuge.

Der Erfindung liegt die Aufgabe zugrunde, die vorstehend dargelegten Nachteile zu vermeiden und das Verfahren zu vereinfachen. Dabei sollen aufwendige Bearbeitungsschritte vermieden werden. Insbesondere soll die Möglichkeit geschaffen werden, ein spanend bearbeitetes Zahnrad mit einem gesinterten, vorzugsweise sintergeschmiedeten Kupplungskörper zu kombinieren.

Diese Aufgabe wird durch die Merkmale der Ansprüche 1 oder 7 gelöst. Gemäß der Erfindung wird zumindest ein Teil durch Sintern hergestellt und eines der beiden Teile erwärmt sowie mit dem anderen Teil dann durch Schrumpfsitz verbunden. Es kann also entweder der Kupplungskörper erwärmt und mit dem Zahnrad dann verbunden werden oder umgekehrt das Zahnrad erwärmt und dann mit dem Kupplungskörper verbunden werden. Die Erfindung umfaßt aber auch die andere Möglichkeit eines Querpreßsitzes, nämlich eines Dehnsitzes. In diesem Falle wird der Kupplungskörper abgekühlt und mit dem Zahnrad dann verbunden oder umgekehrt das Zahnrad abgekühlt und dann mit dem Kupplungskörper verbunden.

Die Verbindung der beiden Teile durch Querpreßsitz, insbesondere durch Schrumpfsitz, hat den Vorteil, daß an die Passung der beiden Teile geringere Anforderungen gestellt werden können. Auch werden aufwendige Verfahren zur Verbindung der beiden Teile vermieden, wie das Laserschweißen oder das Bördeln, oder aber auch eine teure Feinstbearbeitungsweise, wie Schleifen, wenn die Teile in bekannter Weise durch Längspreßsitz miteinander verbunden werden.

Gemäß einer bevorzugten Ausgestaltung der Erfindung wird zumindest ein Teil durch Sintern hergestellt und aus der Sinterwärme auf das andere Teil geschrumpft. Wenn es sich bei dem Teil beispielsweise um den Kupplungskörper handelt, wird dieser aus der Sinterwärme auf das Zahnrad geschrumpft. Es ist dann nicht erforderlich, den Kupplungskörper für das Schrumpfen zu erwärmen, da die Wärme der vorher durchgeführten Sinterung hierfür genügt.

Alternativ zu diesem Verfahren kann ein Teil durch Sinterschmieden hergestellt und aus der Sinterschmiedewärme auf das andere Teil geschrumpft werden. Auch dieses Verfahren kann bevorzugt für das Fügen von Kupplungskörper und Zahnrad vorgesehen werden.

In weiterer Ausgestaltung der Erfindung kann ein Teil durch Sintern oder Sinterschmieden hergestellt, zum Härten aufgekohlt und aus der Kohlungswärme auf das andere Teil durch Abschrecken geschrumpft werden. Wenn es sich bei dem Bauteil um ein Zahnrad mit einem Kupplungskörper handelt, kann der Kupplungskörper aus der Kohlungswärme auf den Sitz des Zahnrades gesteckt und anschließend abgeschreckt werden. Dieses Verfahren ist sowohl bei einem spanend als auch bei einem durch Sintern oder Sinterschmieden hergestellten Kupplungskörper anwendbar. Da Kupplungskörper gemäß der Erfindung häufig, wenn nicht überwiegend, einer Härtung bedürfen, kann die Kohlungswärme günstig für den Vorgang des Verbindens genutzt werden. Das Verbinden ist mittels verhältnismäßig einfacher Vorrichtungen möglich.

An das einfache Verbinden der beiden Teile durch Schrumpfen können bei Bedarf dann als spanende Bearbeitungen die Bohrung des Zahnrades und der Konus des Kupplungskörpers geschliffen werden.

Die Erfindung sieht weiterhin vor, daß bei einem durch Sintern oder Sinterschmieden hergestellten Kupplungskörper dessen Außenverzahnung vor dem Härten mit einem Hinterschnitt versehen wird. Der Hinterschnitt verhindert, daß der geschaltete Gang während der Fahrt, beispielsweise durch Erschütterungen, herausspringt. Während es grundsätzlich möglich ist, die Zahnflanken eines pulvermetallurgisch hergestellten Kupplungskörpers durch Pressen zu verändern, wie es beispielsweise aus EP-A2-0 370 562 bekannt ist, erfolgt in vorteilhafter Ausgestaltung der Erfindung die Herstellung des Hinterschnittes durch Hinterrollen, d. h. durch Abwälzen der Zahnflanken des Kupplungskörpers gegen ein um den Winkel des Hinterschnittes schräggestelltes Druckwalzwerkzeug.

Es ist gemäß der Erfindung zwar nicht erforderlich, daß der Sitz von Zahnrad und Kuppungskörper spanend bearbeitet werden. Dies gilt insbesondere für den bevorzugten Fall, daß der Kupplungskörper durch Sintern oder Sinterschmieden hergestellt worden ist. Der Schrumpfsitz reicht aus, das zu übertragende Drehmoment rutschsicher durchzuleiten. Diese Lösung ist fertigungstechnisch besonders preisgünstig.

In Ausgestaltung der Erfindung ist jedoch vorgesehen, daß das Zahnrad und der Kupplungskörper zusätzlich zu dem durch Schrumpfen erzeugten Reibschluß auch durch Formschluß miteinander verbunden sind. Dabei kann die Formschluß-Verbindung im Bereich des Sitzes aus einem Kerbzahnprofil bestehen. Der Schaft des Zahnrades ist dann mit einer Außenverzahnung und die Bohrung des Kupplungskörpers mit einer Innenverzahnung versehen. Dabei können entweder der Kopfkreis des Kerbzahnprofiles oder der Fußkreis oder die Zahnflanken der Verzahnung den tragenden Bereich des Sitzes darstellen.

Weitere Arten von Formschluß-Verbindungen sind möglich, ohne daß dabei der Erfindungsgedanke verlassen wird. So kann die Formschluß-Verbindung im Bereich des Sitzes aus einem Vielnutprofil oder einem Polygonprofil bestehen.

Um das Abschieben des Kupplungskörpers vom Zahnrad während des Schaltvorganges zu verhindern, wird gemäß der Erfindung vorgesehen, daß der Sitz zumindest ein axiales Sicherungselement aufweist. So kann entweder der Sitz des Zahnrades oder derjenige des Kupplungskörpers oder auch beide Sitze eine oder mehrere Sicherungsrillen aufweisen. Wenn die Sicherungsrillen auf beiden Teilen vorgesehen sind, können sie unter einem Winkel zueinander verlaufen. Insbesondere ist es möglich, daß die Sicherungsrillen des einen Teiles im wesentlichen in Umfangsrichtung und diejenigen des anderen Teiles im wesentlichen in axialer Richtung verlaufen. So kann beispielsweise der Sitz des Zahnrades mit ausgeprägten Drehriefen versehen werden, während der Sitz des Kupplungskörpers axial verlaufende Rillen aufweist.

Gemäß der Erfindung kann das axiale Sicherungselement auch darin bestehen, daß ein Teil einen Anschlagring und das andere Teil eine Anschlagnut aufweist. So ist es möglich, daß der Sitz des Zahnrades mit einem Bund versehen ist, dem eine ringförmige Ausnehmung am Kupplungskörper zugeordnet ist.

Eine bevorzugte Ausgestaltung des axialen Sicherungselementes ist dadurch gekennzeichnet, daß der Sitz kegelförmig ausgebildet ist, wobei sich der größere Kegeldurchmesser an der Außenseite befindet. Es ist dann beim Fügen möglich, den erwärmten Kupplungskörper über den größeren Kegeldurchmesser auf den Sitz des Zahnrades zu schieben, um dann nach dem Abkühlen eine absolute axiale Sicherung zu erhalten. Diese Art des Fügens ist eine Besonderheit bei der Herstellung durch Sintern oder Sinterschmieden und kann allgemein als Wellen-Naben-Verbindung angesehen werden.

Alle vorstehend beschriebenen axialen Sicherungen können insbesondere bei der Herstellung durch Sintern oder Sinterschmieden kostengünstig mit Hilfe von Preß- und/oder Schmiedewerkzeugen hergestellt werden. Auch durch mechanische Bearbeitung kann eine Geometrie in die Innenseite des Kupplungskörpers und/oder die Außenseite des Zahnrades eingebracht werden, die durch mechanische Verklammerung nach dem Schrumpfen ein Abgleiten des Kupplungskörpers vom Zahnrad verhindert und eine nachfolgende Bearbeitung überflüssig macht. Die Sicherung kann bei der Ausführung mit Sicherungsrillen dadurch noch erhöht werden, daß die Sicherungsrillen durch das Schrumpfen eine Formveränderung erfahren.

Die Erfindung ermöglicht es bei allen Ausgestaltungen, daß der Durchmesser der Zahnrad-Verzahnung größer oder kleiner ist als derjenige der Kupplungskörper-Verzahnung.

Weitere Merkmale und Vorteile der Erfindung ergeben sich aus der folgenden Beschreibung mehrerer, die Erfindung nicht beschränkender Ausführungsbeispiele, wobei auf die Zeichnung Bezug genommen wird. Es zeigen:
- Fig. 1: ein Zahnrad mit Kupplungskörper und Kerbzahnprofil im Schnitt,
- Fig. 2: das Zahnrad mit Kupplungskörper gemäß Fig. 1 in der Ansicht,
- Fig. 3: ein Zahnrad mit Kupplungskörper und Vielnutprofil in der Ansicht,
- Fig. 4: ein Zahnrad mit Kupplungskörper und Polygonprofil in der Ansicht,
- Fig. 5: ein Zahnrad mit Kupplungskörper ohne Formschluß-Verbindung,
- Fig. 6: die Einzelheit A gemäß Fig. 1 mit Sicherungsrillen in vergrößertem Maßstab,
- Fig. 7: die Einzelheit A gemäß Fig. 1 mit Anschlagring in vergrößertem Maßstab und
- Fig. 8: die Einzelheit A gemäß Fig. 1 mit kegelförmigem Sitz in vergrößertem Maßstab.

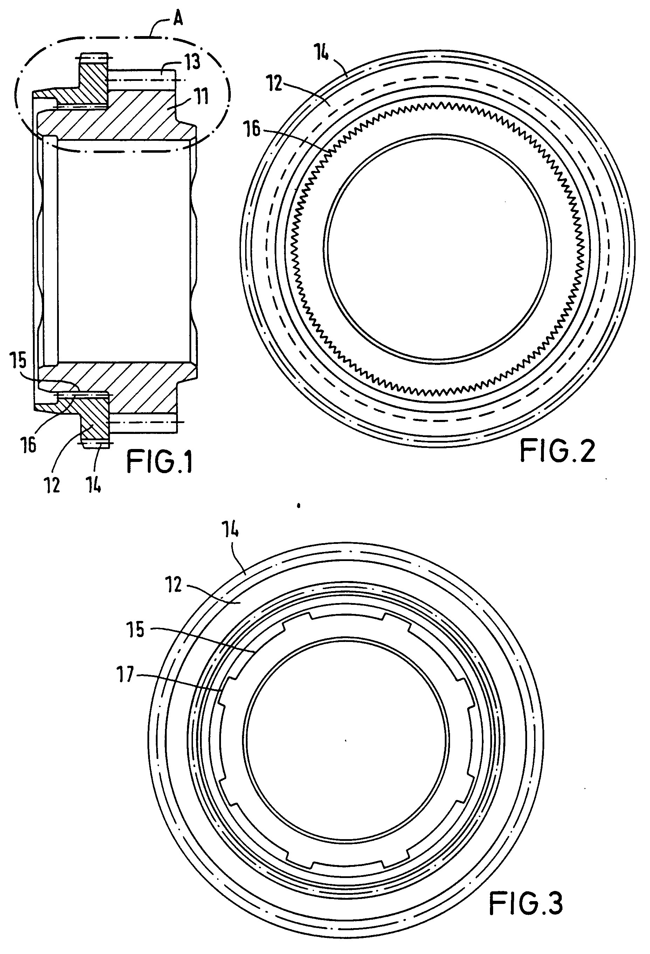

Fig. 1 zeigt, daß das Bauteil aus zwei Teilen besteht, nämlich einem Zahnrad 11 und einem Kupplungskörper 12. Bei dem dargestellten Bauteil ist der Durchmesser der Zahnrad-Verzahnung 13 kleiner als derjenige der Kupplungskörper-Verzahnung 14. Selbstverständlich sind Ausführungsformen möglich, bei denen der Durchmesser der Zahnrad-Verzahnung größer ist als derjenige der KupplungskörperVerzahnung. Zahnrad 11 und Kupplungskörper 12 sind auf einem Sitz 15 durch Schrumpfsitz miteinander fest verbunden. Der Sitz 15 weist ein Kerbzahnprofil 16 auf. Dieses ist in Fig. 2 anschaulich dargestellt und zeigt, daß das Zahnrad und der Kupplungskörper nicht nur durch Reibschluß sondern auch durch Formschluß miteinander verbunden sind.

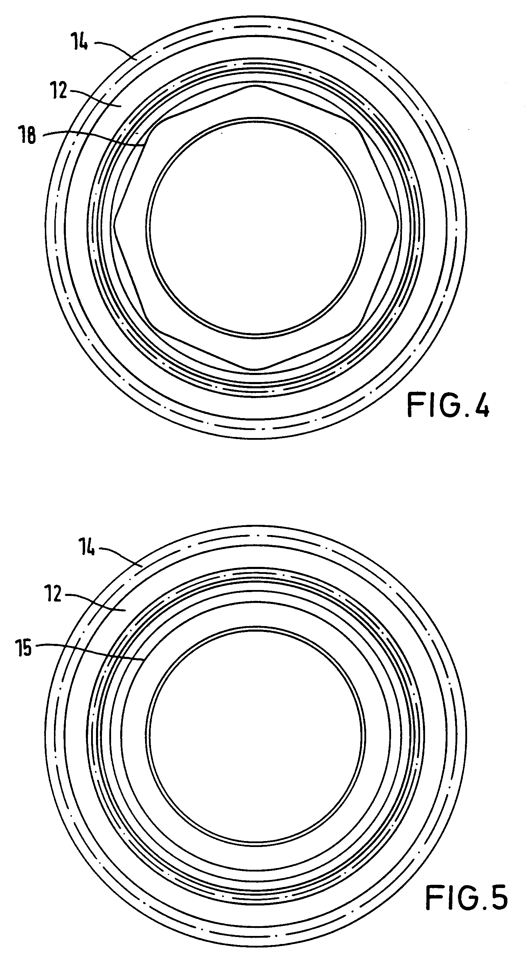

Dies gilt entsprechend für die Ausführungsform gemäß Fig. 3. Danach besteht die Formschluß-Verbindung im Bereich des Sitzes 15 aus einem Vielnutprofil 17. Demgegenüber zeigt Fig. 4, daß die Formschluß-Verbindung aus einem Polygonprofil 18 besteht. Dagegen ist in Fig. 5 eine Ausführungsform ohne Formschluß-Verbindung dargestellt, so daß lediglich eine Reibschluß-Verbindung vorhanden ist. Diese besteht in dem zylindrischen Sitz 15.

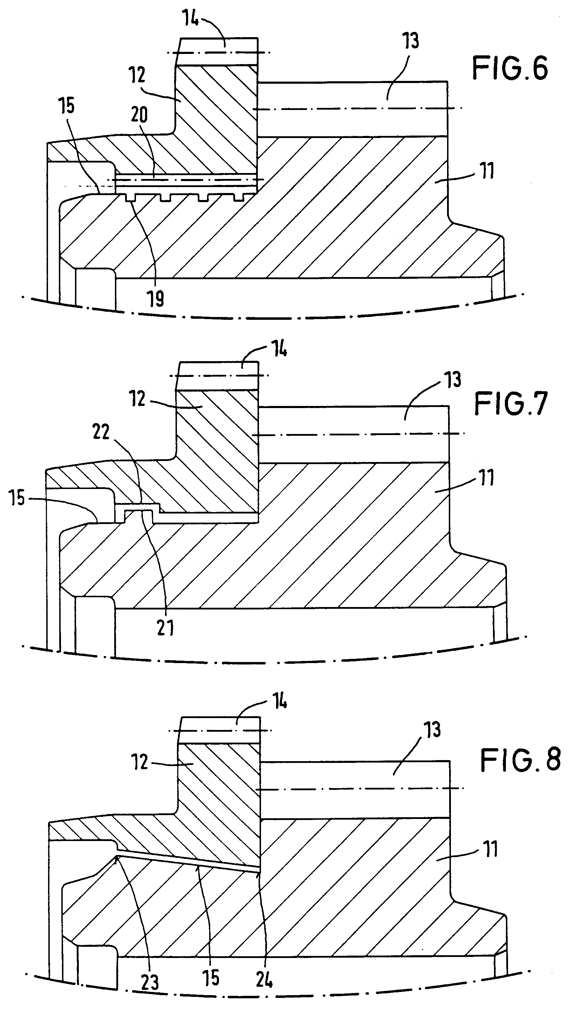

Verschiedene Ausführungsformen des axialen Sicherungselementes gehen aus den Figuren 6 bis 8 hervor. Zunächst zeigt Fig. 6, daß auf dem Sitz 15 des Zahnrades 11 Sicherungsrillen 19 in Umfangsrichtung verlaufen. Demgegenüber sind Sicherungsrillen 20 im Kupplungskörper 12 axial angeordnet. Der Darstellung halber befindet sich zwischen den Sicherungsrillen 19 und 20 ein Spalt, der nach dem Schrumpfen selbstverständlich nicht mehr vorhanden ist. Dies gilt entsprechend für die in den Figuren 7 und 8 dargestellten Spalte.

Die Ausführungsform gemäß Fig. 7 weist als axiales Sicherungselement einen im Zahnrad 11 ausgebildeten Anschlagring 21 auf. Diesem entspricht eine Anschlagnut 22 im Kupplungskörper 12. Schließlich ist in Fig. 8 der Sitz 15 kegelförmig ausgebildet. Dabei befindet sich der grössere Kegeldurchmesser 23 an der Außenseite des Sitzes 15, der kleinere Kegeldurchmesser 24 demgegenüber an der Innenseite.

## Patentansprüche

1. Verfahren zur Herstellung eines zweiteiligen Bauteiles, nämlich eines Zahnrades mit einem Kupplungskörper auf einem Sitz des Zahnrades, insbesondere für Synchrongetriebe,bei dem das Zahnrad und der Kupplungskörper einzeln hergestellt und anschließend fest miteinander verbunden werden, **dadurch gekennzeichnet**, daß zumindest ein Teil durch Sintern hergestellt und eines der beiden Teile erwärmt sowie mit dem anderen Teil dann durch Schrumpfsitz verbunden wird.

2. Verfahren nach Anspruch 1, dadurch gekennzeichnet, daß zumindest ein Teil durch Sintern hergestellt und aus der Sinterwärme auf das andere Teil geschrumpft wird.

3. Verfahren nach Anspruch 1, dadurch gekennzeichnet, daß zumindest ein Teil durch Sinterschmieden hergestellt und aus der Sinterschmiedewärme auf das andere Teil geschrumpft wird.

4. Verfahren nach Anspruch 1, dadurch gekennzeichnet, daß zumindest ein Teil durch Sintern oder Sinterschmieden hergestellt, zum Härten aufgekohlt und aus der Kohlungswärme auf das andere Teil durch Abschrecken geschrumpft wird.

5. Verfahren nach Anspruch 4, dadurch gekennzeichnet, daß der Kupplungskörper (12) durch Sintern oder Sinterschmieden hergestellt und seine Verzahnung (14) vor dem Härten mit einem Hinterschnitt versehen wird.

6. Verfahren nach Anspruch 5, dadurch gekennzeichnet, daß der Hinterschnitt durch Hinterrollen hergestellt wird, d. h. durch Abwälzen der Zahnflanken des Kupplungskörpers (12) gegen ein um den Winkel des Hinterschnittes schräggestelltes Druckwalzwerkzeug.

7. Zahnrad mit Kupplungskörper nach einem der vorstehenden Verfahrensansprüche, wobei das Zahnrad und der Kupplungskörper einzeln hergestellt und anschließend fest miteinander verbunden werden, dadurch gekennzeichnet, daß das Zahnrad (11) und der Kupplungskörper (12) zusätzlich zu dem durch das Schrumpfen erzeugten Reibschluß auch durch Formschluß miteinander verbunden sind und daß zumindest eines der beiden Teile durch Sintern hergestellt ist.

8. Zahnrad mit Kupplungskörper nach Anspruch 7, dadurch gekennzeichnet, daß die Formschluß-Verbindung im Bereich des Sitzes (15) aus einem Kerbzahnprofil (16) besteht.

9. Zahnrad mit Kupplungskörper nach Anspruch 8, dadurch gekennzeichnet, daß der Kopfkreis des Kerbzahnprofiles (16) den tragenden Bereich des Sitzes (15) darstellt.

10. Zahnrad mit Kupplungskörper nach Anspruch 8, dadurch gekennzeichnet, daß der Fußkreis des Kerbzahnprofiles (16) den tragenden Bereich des Sitzes (15) darstellt.

11. Zahnrad mit Kupplungskörper nach Anspruch 8, dadurch gekennzeichnet, daß die Zahnflanken des Kerbzahnprofiles (16) den tragenden Bereich des Sitzes (15) darstellen.

12. Zahnrad mit Kupplungskörper nach Anspruch 7, dadurch gekennzeichnet, daß die Formschluß-Verbindung im Bereich des Sitzes (15) aus einem Vielnutprofil (17) besteht.

13. Zahnrad mit Kupplungskörper nach Anspruch 7, dadurch gekennzeichnet, daß die Formschluß-Verbindung im Bereich des Sitzes (15) aus einem Polygonprofil (18) besteht.

14. Zahnrad mit Kupplungskörper nach einem der vorstehenden Ansprüche, dadurch gekennzeichnet, daß der Sitz (15) mindestens ein axiales Sicherungselement aufweist.

15. Zahnrad mit Kupplungskörper nach Anspruch 14, dadurch gekennzeichnet, daß zumindest ein Teil eine oder mehrere Sicherungsrillen (19, 20) aufweist.

16. Zahnrad mit Kupplungskörper nach Anspruch 15, dadurch gekennzeichnet, daß beide Teile Sicherungsrillen (19, 20) aufweisen, die unter einem Winkel zueinander verlaufen.

17. Zahnrad mit Kupplungskörper nach Anspruch 16, dadurch gekennzeichnet, daß die Sicherungsrillen (19, 20) des einen Teiles im wesentlichen in Umfangsrichtung und diejenigen des anderen Teiles im wesentlichen in axialer Richtung verlaufen.

18. Zahnrad mit Kupplungskörper nach Anspruch 14, dadurch gekennzeichnet, daß das eine Teil einen Anschlagring (21) und das andere Teil eine Anschlagnut (22) aufweist.

19. Zahnrad mit Kupplungskörper nach Anspruch 14, dadurch gekennzeichnet, daß der Sitz (15) kegelförmig ausgebildet ist, wobei sich der größere Kegeldurchmesser (23) an der Außenseite befindet.

20. Zahnrad mit Kupplungskörper nach einem der vorstehenden Ansprüche, dadurch gekennzeichnet, daß der Durchmesser der Zahnrad-Verzahnung (13) größer ist als derjenige der Kupplungskörper-Verzahnung (14).

## Claims

1. Process for the manufacture of a two-piece construction namely a gear wheel with a clutch body on a seat of the gear wheel, in particular for synchromesh transmission, in which the gear wheel and the clutch body are manufactured individually and are subsequently firmly fixed to one another, characterised in that, at least one component is manufactured by sintering and one of the two components is heated and then fixed to the other component by shrink fitting.

2. Process in accordance with Claim 1, characterised in that, at least one component is manufactured by sintering and from the sintering temperature it is shrunk onto the other component.

3. Process in accordance with Claim 1, characterised in that, at least one component is manufactured by sinter-forging and from the sinter-forging temperature it is shrunk onto the other component.

4. Process in accordance with Claim 1, characterised in that, at least one component is manufactured by sintering or sinter-forging, case-hardened and from the case-hardening temperature it is shrunk onto the other component by chilling.

5. Process in accordance with Claim 4, characterised in that, the clutch body (12) is manufactured by sintering or sinter-forging and before hardening its toothing (14) is provided with an undercut.

6. Process in accordance with Claim 5, characterised in that, the undercut is manufactured by back-rolling, ie, by rolling off the tooth profiles of the clutch body (12) against a calender rolling tool inclined at the angle of the undercut.

7. Gear wheel with clutch body in accordance with one of the preceding process Claims whereby the gear wheel and the clutch body are manufactured individually and are then firmly fixed to one another, characterised in that, the gear wheel (11) and the clutch body (12) are also positively interlocked to one another in addition to the frictional bonding generated by shrinking, and that at least one of the two components is manufactured by sintering.

8. Gear wheel with clutch body in accordance with Claim 7, characterised in that, the positive interlocking in the region of the seat (15) consists of a serrated profile (16).

9. Gearwheel with clutch body in accordance with Claim 8, characterised in that, the tip circle of the serrated profile (16) represents the load-bearing region of the seat (15).

10. Gear wheel with clutch body in accordance with Claim 8, characterised in that, the root circle of the serrated profile (16) represents the load-bearing region of the seat (15).

11. Gear wheel with clutch body in accordance with Claim 8, characterised in that, the tooth profiles of the serrated profile (16) represent the load-bearing region of the seat (15).

12. Gear wheel with clutch body in accordance with Claim 7, characterised in that, the positive interlocking in the region of the seat (15) consists of a multi-groove profile (17).

13. Gear wheel with clutch body in accordance with Claim 7, characterised in that, the positive interlocking in the region of the seat (15) consists of a polygonal profile (16).

14. Gear wheel with clutch body in accordance with one of the preceding Claims, characterised in that, the seat (15) exhibits at least one axial locking element.

15. Gear wheel with clutch body in accordance with Claim 14, characterised in that, at least one component exhibits one or more locking grooves (19, 20).

16. Gear wheel with clutch body in accordance with Claim 15, characterised in that, both components exhibit locking grooves (19, 20) which run at an angle to one another.

17. Gear wheel with clutch body in accordance with Claim 16, characterised in that, the locking grooves (19, 20) of one component run essentially in a circumferential direction and those of the other component run essentially in an axial direction.

18. Gear wheel with clutch body in accordance with Claim 14, characterised in that, one component exhibits a stop collar (21) and the other component exhibits a stop slot (22).

19. Gear wheel with clutch body in accordance with Claim 14, characterised in that, the seat (15) is manufactured cone-shaped whereby the larger cone diameter (23) is located at the outer side.

20. Gear wheel with clutch body in accordance with one of the preceding Claims, characterised in that, the diameter of the gear wheel toothing (13) is greater than that of the clutch body toothing (14).

## Revendications

1. Procédé pour la fabrication d'une pièce en deux parties, à savoir une roue dentée et un dispositif d'embrayage sur un logement de la roue dentée, en particulier pour des synchroniseurs, selon lequel on fabrique séparément la roue dentée et le dispositif d'embrayage et on les assemble ensuite de inanière à les rendre solidaires, caractérisé en ce que l'on fabrique au moins une partie par frittage, on chauffe une des deux parties et on l'assemble ensuite avec l'autre partie par ajustage serré par contraction.

2. Procédé selon la revendication 1, caractérisé en ce que l'on fabrique au inoins une partie par frittage et on la fait se contracter sur l'autre partie en partant de la chaleur du frittage.

3. Procédé selon la revendication 1, caractérisé en ce que l'on fabrique au moins une partie par frittage-forgeage et on la fait se contracter sur l'autre partie en partant de la chaleur du frittage-forgeage.

4. Procédé selon la revendication 1, caractérisé en ce que l'on fabrique au moins une partie par frittage ou par frittage-forgeage, on la carbure pour la durcir et on la fait se contracter sur l'autre partie par trempe en partant de la chaleur de la carburation.

5. Procédé selon la revendication 4, caractérisé en ce que l'on fabrique le dispositif d'embrayage (12) par frittage ou par frittage-forgeage et on munit sa denture (14) d'une contre-dépouille avant la trempe.

6. Procédé selon la revendication 5, caractérisé en ce que l'on fabrique la contre-dépouille par un roulage par l'arrière, c'est-à-dire par un roulage des profils de dents du dispositif d'embrayage (12) contre un outil de laminage placé obliquement selon l'angle de la contre-dépouille.

7. Roue dentée avec dispositif d'embrayage selon l'une des revendications de procédé précédentes, la roue dentée et le dispositif d'embrayage étant fabriqués séparément et étant assemblés ensuite de manière à être solidaires, caractérisée en ce que la roue dentée (11) et le dispositif d'embrayage (12) sont assemblés, en plus du blocage par friction produit par la contraction, par le blocage géométrique dû à leur forme, au moins l'une des deux parties étant fabriquée par frittage.

8. Roue dentée avec dispositif d'embrayage selon la revendication 7, caractérisée en ce que l'assemblage géométrique dans la zone du logement (15) consiste en un profil denté (16).

9. Roue dentée avec dispositif d'embrayage selon la revendication 8, caractérisée en ce que le cercle de tête du profil denté (16) représente la zone porteuse du logement (15).

10. Roue dentée avec dispositif d'embrayage selon la revendication 8, caractérisée en ce que le cercle de pied du profil denté (16) représente la zone porteuse du logement (15).

11. Roue dentée avec dispositif d'embrayage selon la revendication 8, caractérisée en ce que les profils de dents du profil denté (16) représentent la zone porteuse du logement (15).

12. Roue dentée avec dispositif d'embrayage selon la revendication 7, caractérisée en ce que l'assemblage géométrique dans la zone du logement (15) consiste en un profil à rainures multiples (17).

13. Roue dentée avec dispositif d'embrayage selon la revendication 7, caractérisée en ce que l'assemblage géométrique dans la zone du logement (15) consiste en un profil polygonal (18).

14. Roue dentée avec dispositif d'embrayage selon l'une des revendications précédentes, caractérisée en ce que le logement (15) comporte au moins un élément de blocage axial.

15. Roue dentée avec dispositif d'embrayage selon la revendication 14, caractérisée en ce que au moins une partie comporte une ou plusieurs rainures de blocage (19, 20).

16. Roue dentée avec dispositif d'embrayage selon la revendication 15, caractérisée en ce que les deux parties comportent des rainures de blocage (19, 20) qui forment un certain angle les unes par rapport aux autres.

17. Roue dentée avec dispositif d'embrayage selon la revendication 16, caractérisée en ce que les rainures de blocage (19, 20) d'une partie s'étendent globalement dans la direction circonférentielle et celles de l'autre partie globalement dans la direction axiale.

18. Roue dentée avec dispositif d'embrayage selon la revendication 14, caractérisée en ce qu'une partie comporte une bague de butée (21) et l'autre partie une rainure de butée (22).

19. Roue dentée avec dispositif d'embrayage selon la revendication 14, caractérisée en ce que le logement (15) est construit en forme de cône, le plus grand diamètre (23) du cône se trouvant au niveau de la face extérieure.

20. Roue dentée avec dispositif d'embrayage selon l'une des revendications précédentes, caractérisée en ce que le diamètre de la denture (13) de la roue dentée est supérieur à celui de la denture (14) du dispositif d'embrayage.
